(19) **Europäisches Patentamt European Patent Office Office européen des brevets**

(11) **EP 3 110 760 B1**

(12) **EUROPEAN PATENT SPECIFICATION**

(45) Date of publication and mention of the grant of the patent:
**05.12.2018 Bulletin 2018/49**

(51) Int Cl.:
*C01B 33/193* [(2006.01)]     *C09C 1/30* [(2006.01)]
*C08L 9/06* [(2006.01)]

(21) Application number: **15709124.0**

(22) Date of filing: **26.02.2015**

(86) International application number:
**PCT/EP2015/053990**

(87) International publication number:
**WO 2015/128404 (03.09.2015 Gazette 2015/35)**

(54) **PROCESS FOR THE PREPARATION OF PRECIPITATED SILICAS, PRECIPITATED SILICAS AND THEIR USES, IN PARTICULAR FOR THE REINFORCEMENT OF POLYMERS**

VERFAHREN ZUR HERSTELLUNG VON FÄLLUNGSKIESELSÄUREN, FÄLLUNGSKIESELSÄUREN UND DEREN VERWENDUNGEN, INSBESONDERE ZUR VERSTÄRKUNG VON POLYMEREN

PROCÉDÉ DE PRÉPARATION DE SILICES PRÉCIPITÉES, SILICES PRÉCIPITÉES ET LEURS UTILISATIONS, NOTAMMENT POUR LE RENFORCEMENT DE POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 EP 14305292**

(43) Date of publication of application:
**04.01.2017 Bulletin 2017/01**

(73) Proprietor: **Rhodia Operations**
**75009 Paris (FR)**

(72) Inventors:
• **BOIVIN, Cédric**
  **F-69380 Chasselay (FR)**
• **GUY, Laurent**
  **F-69140 Rillieux-la-Pape (FR)**

• **PERIN, Eric**
  **F-69400 Villefranche sur Saône (FR)**
• **LAMIRI, Kilani**
  **F-69210 L' Arbresle (FR)**

(74) Representative: **Ferri, Isabella**
**Solvay S.A.**
**Viale Lombardia, 20**
**20021 Bollate (MI) (IT)**

(56) References cited:
**EP-A1- 0 396 450       WO-A1-2014/033300**
**US-A- 5 800 608        US-A1- 2009 214 449**
**US-A1- 2013 156 674    US-A1- 2013 171 051**
**US-A1- 2013 178 569**

**Description**

**Technical Field**

The present invention relates to a process for the preparation of modified silica, to modified silica and its applications, such as reinforcing filler material in polymers. In particular the present invention relates to a process for the modification of silica comprising the use of carboxylic acids.

**Background Art**

Precipitated silica has long been used as white reinforcing filler in polymeric materials and, in particular, in elastomers.

According to a general process, which has been described for instance in US 5,800,608, US 2013/0156674 A1 or US 2013/178569 A1, precipitated silica is prepared by means of a reaction whereby a silicate, such as the silicate of an alkaline metal, for instance sodium silicate, is precipitated with an acidifying agent, such as sulfuric acid, followed by separation of the resulting solid by filtration. A filter cake is thus obtained which is generally submitted to a liquefaction operation before being dried, generally by atomization. Several methods can be employed for the precipitation of silica: notably, the addition of an acidifying agent to a sediment of the silicate, or simultaneous addition, partial or total, of an acidifying agent and of the silicate to water or to a silicate sediment already present in the vessel.

The use of carboxylic acids in the preparation of precipitated silica has been previously disclosed, for instance in WO 2006/125927 (RHODIA CHIMIE) 30/11/2006, which discloses the use of a carboxylic acid before or after the step of disintegration of the filter cake. WO 2006/125927 however does not disclose the use of certain polycarboxylic acids in combination with a certain type of precipitated silica.

It has now been found that the use of certain polycarboxylic acids during or after the step of disintegration of the filter cake provides precipitated silicas which, when used in polymeric compositions, affords reduced viscosity and similar or improved dynamic and mechanical properties with respect to previously known precipitated silicas.

**Description of invention**

A first object of the present invention is a process for the production of precipitated silica comprising reacting at least one silicate with at least one acidifying agent, to provide a silica suspension which comprises the steps of:

(i) providing a base mixture comprising a portion of the total amount of the silicate involved in the reaction and an electrolyte, wherein the concentration of silicate (expressed as $SiO_2$) in said base mixture is less than 120 g/l and the concentration of the electrolyte in said base mixture is between 15 and 25 g/l;
(ii) adding an amount of an acidifying agent to said base mixture to obtain a pH value of between 7.0 and 8.5;
(iii) simultaneously adding any remaining silicate and any required additional acidifying agent to said base mixture while maintaining the pH value between 7.0 and 8.5;
(iv) further adding an acidifying agent to obtain a pH value of between 4.0 and 6.0 to obtain a silica suspension;
(v) submitting said silica suspension to filtration to provide a filter cake;
(vi) submitting said filter cake to a liquefaction step, optionally comprising the addition of an aluminum compound, to obtain a suspension of precipitated silica; and
(vii) optionally, drying the precipitated silica obtained after the liquefaction step;

wherein at least one polycarboxylic acid selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid, glutaconic acid, malic acid, phthalic acid, ortophthalic acid, isophthalic acid, trimesic acid, trimellitic acid is added to the filter cake during or after the liquefaction step and wherein reacting of the at least one silicate with the at least one acidifying agent is carried out at a constant temperature comprised between 80 and 97°C.

In step (i) of the process a base mixture comprising a portion of the total amount of the silicate involved in the reaction and an electrolyte is provided in an appropriate reaction vessel.

The amount of silicate initially present in the vessel represents only a portion of the total amount of silicate involved in the reaction. Any common form of silicate may be used in the process, such as metasilicates, disilicates and advantageously an alkali metal silicate, in particular sodium or potassium silicate.

The silicate initially added to the vessel conventionally has a concentration (expressed in terms of $SiO_2$) of between 40 and 360 g/l, for example between 80 and 300 g/l.

Preferably, the silicate is sodium silicate. When sodium silicate is used, it generally exhibits a ratio $SiO_2/Na_2O$

by weight of between 2.0 and 4.0, in particular between 2.4 and 3.9, for example between 3.1 and 3.8.

According to another characteristic of this process, the initial concentration of silicate (expressed in terms of $SiO_2$) in the vessel is less than 120 g/l. Preferably, the concentration is less than 110 g/l, in particular less than 100 g/l. In particular, when the acid used for the neutralization has a high concentration, in particular of greater than 70%, it is then advisable to work with an initial concentration of silicate in the vessel (expressed in terms of $SiO_2$) of less than 100 g/l. The initial concentration of silicate in the vessel is generally at least 50 g/l.

The term "electrolyte" is understood in the present specification as normally accepted, that is to say that it means any ionic or molecular substance which, when in solution, decomposes or dissociates to form ions or charged particles. As suitable electrolytes mention may be made of alkali metals and alkaline earth metals salts, in particular the salt of the starting silicate metal and of the acidifying agent, for example sodium chloride in the case of the reaction of a sodium silicate with hydrochloric acid or, preferably, sodium sulfate in the case of the reaction of a sodium silicate with sulfuric acid.

According to one characteristic of this preparation process, the initial concentration of electrolyte in the vessel is less than 25 g/l, in particular less than 24 g/l, especially less than 21 g/l, for example less than 21 g/l; while generally being greater than 15 g/l.

The choice of the acidifying agent and of the silicate is made in a way well known in the art. Use is generally made, as acidifying agent, of a strong inorganic acid, such as sulfuric acid, nitric acid or hydrochloric acid. Alternatively, an organic acid, such as acetic acid, formic acid or carbonic acid may also be used in this step of the process.

The acidifying agent can be dilute or concentrated; the acid concentration can be between 0.4 and 36.0N, for example between 0.6 and 1.5N.

In particular, in the case where the acidifying agent is sulfuric acid, its concentration can be between 40 and 180 g/l, for example between 60 and 130 g/l.

The addition of acidifying agent in stage (ii) of the process leads to a drop in the pH of the reaction medium. Addition of the acidifying agent is carried out until a value of the pH of the reaction medium of at least 7.0, in particular of between 7.0 and 8.5, for example of between 7.5 and 8.5, is reached.

Once the desired pH value has been reached a simultaneous addition of acidifying agent and of the remaining amount of silicate is then advantageously carried out in stage (iii). Said addition is carried out while maintaining the pH at a constant value of between 7.0 and 8.5, for example of between 7.5 and 8.5.

In stage (iv) a further addition of acidifying agent is carried out to obtain a pH value of between 4.0 and 6.0, even between 4.5 and 5.8. A silica suspension is thus obtained.

On conclusion of stage (iv) and in particular after the abovementioned addition of acidifying agent, a maturing of the resulting silica suspension can be carried out, at the same pH obtained at the end of stage (iv). This step is generally carried out with stirring of the suspension, for example for 2 to 45 minutes, in particular for 3 to 30 minutes.

The temperature of the reaction medium is generally between 80° and 97° C, preferably between 85° and 96°C, more preferably between 88° and 95C.

The reaction is carried out at a constant temperature. The reaction is carried out at a constant temperature comprised between 80° and 97°C, preferably comprised between 85° and 96°C, more preferably comprised between 88° and 95°C.

The expression "constant temperature" when referred to the precipitation reaction encompasses processes wherein the temperature may fluctuate around the set value by +/- 2°C.

At the end of steps (i) to (iv) as above described, a silica suspension is obtained. A liquid/solid separation step (v) is subsequently carried out. The separation step normally comprises a filtration, followed, if necessary, by a washing operation, carried out by means of any suitable method, for example by means of a belt filter, a vacuum filter or, preferably, a filter press. A filter cake is obtained at the end of the filtration step.

According to the process of the invention, the filter cake undergoes a liquefaction step (vi) during, or after, which at least one polycarboxylic acid is added to the filter cake.

The liquefaction step may comprise the addition to the filter cake of an aluminum compound.

The term "liquefaction" is intended herein to indicate a process wherein a solid, namely the filter cake, is converted into a fluid-like mass. The expressions "liquefaction step", "liquefaction operation" or "disintegration" are interchangeably intended to denote a process wherein the filter cake is transformed into a flowable suspension, which can then be easily dried. After the liquefaction step the filter cake is in a flowable, fluid-like form and the precipitated silica is in suspension.

The filter cake subjected to the liquefaction step may be a mixture of more than one filter cake, each one obtained from the filtration of a silica suspension, or a part of the silica suspension, obtained from the precipitation step. The filter cake may optionally be washed or rinsed before the liquefaction step.

According to a first embodiment of the process of the invention, no aluminium compound is added to the filter cake during the liquefaction step. The liquefaction step typically comprises a mechanical treatment which results in a reduction of the granulometry of the silica in suspension. Said mechanical treatment may be carried out by passing the filter cake through a colloidal-type mill or a ball mill. The mixture which is obtained after the liquefaction step is hereinafter referred to as "suspension of precipitated silica". The at least one polycarboxylic acid may be added to the filter cake during or after the mechanical treatment has taken place.

In an alternative embodiment of the invention, the liquefaction step is carried out by subjecting the filter cake to a chemical action by addition of an aluminum compound, for example sodium aluminate, and of at least one polycarboxylic acid, preferably coupled with a mechanical action as described above.

In a first aspect of said alternative embodiment, the aluminum compound and the at least one polycarboxylic acid are simultaneously added to the filter cake during the liquefaction step (co-addition).

In a second aspect, during the liquefaction step, the aluminum compound is added to the filter cake prior to the addition of the at least one polycarboxylic acid.

In a third, preferred, aspect, the liquefaction step is carried out by subjecting the filter cake to a chemical action by addition of an aluminum compound, preferably coupled with a mechanical action as described above. In this third aspect, at least one polycarboxylic acid is added, after the liquefaction step, to the suspension of precipitated silica, that is to the disintegrated filter cake.

The aluminum compound is typically chosen from alkali metal aluminates. In particular, the aluminum compound is sodium aluminate.

When an aluminum compound is added to the filter cake during the liquefaction operation the amount is generally such that the ratio of aluminum compound to amount of silica, expressed as $SiO_2$, present in the filter cake is between 0.20% and 0.75%, preferably between 0.20% and 0.50% by weight, more preferably between 0.25% and 0.45% by weight.

According to the process of the invention at least one polycarboxylic acid is added to the silica during or after the liquefaction step.

The expression "polycarboxylic acid" is used herein to refer to carboxylic acids comprising at least two carboxylic acid functional groups. The expression "carboxylic acid functional group" is used herein in its customary meaning, to refer to the -COOH functional group.

Polycarboxylic acids suitable for the process of the invention may have two, three, four or even more than four carboxylic acid functional groups. Preferably, the polycarboxylic acids suitable for the process of the invention are selected from the group consisting of the dicarboxylic acids and the tricarboxylic acids.

The at least one polycarboxylic acid suitable for the process of the invention is selected from the linear or branched, saturated or unsaturated, aliphatic polycarboxylic acids having from 2 to 20 carbon atoms and from the aromatic polycarboxylic acids as defined in the claims.

Mixtures of at least one polycarboxylic acid with other acids, e.g. monocarboxylic acids are not excluded from the invention.

The at least one polycarboxylic acid may optionally comprise hydroxy functional groups. Typically, the at least one polycarboxylic acid is selected from the group consisting of the linear or branched, saturated or unsaturated, aliphatic polycarboxylic acids having from 2 to 16 carbon atoms and the aromatic polycarboxylic acids as defined in the claims.

Among the aliphatic polycarboxylic acids mention may be made of the linear polycarboxylic acids, saturated or unsaturated polycarboxylic acids as defined in the claims.

Notable, non-limiting examples of suitable linear aliphatic polycarboxylic acids are the acids selected from the group consisting of malonic acid, tricarballylic acid, glutaric acid, adipic acid, pimelic acid, suberic acid, azelaic acid, sebacic acid.

Among branched polycarboxylic acids mention may be made of methylsuccinic acid, ethylsuccinic acid, oxalosuccinic acid, methyladipic acid, methylglutaric acid, dimethylglutaric acid. For the avoidance of doubt, the expression "methylglutaric acid" is used herein to indicate both 2-methylglutaric acid and 3-methylglutaric acid, as well as mixtures of the two isomers in any proportion. The expression "2-methylglutaric acid" is used herein to indicate both the (S) and (R) forms of the compound as well as their racemic mixture.

Among the unsaturated polycarboxylic acids mention may be made of fumaric acid, itaconic acid, muconic acid, aconitic acid, traumatic acid, glutaconic acid.

Among polycarboxylic acids comprising hydroxyl functional groups mention may be made of malic acid.

Among the aromatic polycarboxylic acids, mention may be made of the phthalic acids, namely phthalic acid, ortophthalic acid and isophthalic acid, trimesic acid, trimellitic acid.

Preferably the at least one polycarboxylic acid for the process of the invention is selected from the group consisting of malonic acid, tricarballylic acid, glutaric acid, adipic acid, pimelic acid, suberic acid, azelaic acid, sebacic acid, methylsuccinic acid, ethylsuccinic acid, methyladipic acid, methylglutaric acid, dimethylglutaric acid, malic acid.

The at least one polycarboxylic acid may be conveniently selected from the group consisting of adipic acid, succinic acid, ethylsuccinic acid, glutaric acid, methylglutaric acid.

The at least one polycarboxylic acid may be selected from the group consisting of malonic acid, tricarballylic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid. Preferably, at least one polycarboxylic acid is selected from the group consisting of malonic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid. More preferably at least one polycarboxylic acid is selected from the group consisting of glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid. Even more preferably at least one polycarboxylic acid is selected from the group consisting of glutaric acid, adipic acid, methyladipic acid, methylsuccinic acid, ethylsuccinic acid, methylglutaric acid, dimethylglutaric acid, malic acid.

In an embodiment of the invention, a mixture of polycarboxylic acids is used during or after the liquefaction step. The mixture of polycarboxylic acids comprises at least two polycarboxylic acids as defined above. The mixture may comprise two, three, four or even more than four polycarboxylic acids. Typically, the mixture comprises two polycarboxylic acids. Preferably, the mixture comprises three polycarboxylic acids as defined above. More preferably, the mixture comprises three polycarboxylic acids selected from the group consisting of the dicarboxylic acids and the tricarboxylic acids.

In an advantageous embodiment, the mixture comprises three polycarboxylic acids, preferably three dicarboxylic acids. Typically, the mixture consists of three dicarboxylic acids, although impurities may be present in an amount typically not exceeding 2.00 wt% of the total mixture of polycarboxylic acids.

In a first aspect of said embodiment, the mixture comprises adipic acid, glutaric acid and succinic acid. The three acids may be present in the mixture in any proportion.

Typically, the amount of adipic acid in the mixture is equal to or greater than 15.00 wt%, preferably equal to or greater than 20.00 wt%; the amount of adipic acid is generally equal to or less than 35.00 wt%, preferably equal to less than 30.00 wt%.

The amount of glutaric acid is typically equal to or greater than 40.00 wt%, preferably equal to or greater than 45.00 wt% and equal to or less than 65.00 wt%, preferably equal to or less than 60.00 wt%.

The amount of succinic acid in the mixture is equal to or greater than 13.00 wt%, preferably equal to or greater than 15.00 wt% and equal to or less than to 28.00 wt%, preferably equal to or less than 25.00 wt%. The percentages are referred to the total amount of polycarboxylic acids in the mixture. Such a mixture may advantageously be obtained from a process for the manufacture of adipic acid.

In a second aspect of said embodiment, the mixture comprises methylglutaric acid, ethylsuccinic acid and adipic acid. The three acids may be present in the mixture in any proportion.

Preferably, the mixture comprises a major proportion of methylglutaric acid with respect to the total combined weight of ethylsuccinic acid and adipic acid. Typically, the amount of methylglutaric acid in the mixture is at least 50.00 wt%; preferably it is equal to or greater than 60.00 wt%, more preferably equal to or greater than 80.00 wt%, more preferably equal to or greater than 90.00 wt%. The amount of methylglutaric acid in the mixture is equal to or less than 97.00 wt%, preferably equal to less than 96.00 wt%, more preferably equal to less than 95.50 wt%.

The amount of ethylsuccinic acid is generally equal to or greater than 3.00 wt%, preferably equal to or greater than 3.50 wt%, more preferably equal to or greater than 3.90 wt% and equal to or less than 20.00 wt%, preferably equal to or less than 12.00 wt%, more preferably equal to or less than 9.70 wt%.

The amount of adipic acid in the mixture is equal to or greater than 0.05, preferably equal to or greater than 0.08 wt%, more preferably equal to or greater than 0.10 wt% and equal to or less than to 20.00 wt%, preferably equal to or less than 10.00 wt%, more preferably equal to or less than 5.00 wt%.

The methylglutaric acid in the mixture may be 2-methylglutaric acid. Alternatively, the methylglutaric acid may be 3-methylglutaric acid. Still alternatively, the methylglutaric acid in the mixture may be a mixture of 2-methylglutaric acid and 3-methylglutaric acid, in any proportion of the two.

The mixture of polycarboxylic acids defined above may advantageously be obtained by hydrolysis, acid or basic, of a mixture comprising methylglutaronitrile, ethylsuccinonitrile and adiponitrile. Said mixture may conveniently derive from the process of preparation of adiponitrile by hydrocyanation of butadiene as known in the art.

In any of the polycarboxylic mixtures, a part or the totality of the carboxylic acid functional groups may be present in the form of a carboxylic acid derivative, namely in the form of an anhydride, ester, or salt, for instance the salt of an alkaline metal (e.g. sodium or potassium) or an ammonium salt. The term "carboxylate" will be used hereinafter to indicate the derivatives of the carboxylic acid functional groups as defined above.

Thus, in a first embodiment, the mixture of polycarboxylic acids used in the process of the invention may comprise:

- methylglutaric acid, typically from 60.00 to 96.00 wt%, for instance from 90.00 to 95.50 wt%;
- ethylsuccinic anhydride, typically from 3.50 to 20.00 wt%, for instance from 3.90 to 9.70 wt%; and
- adipic acid, typically from 0.05 to 20.00 wt%, for instance from 0.10 to 0.30 wt%.

In an alternative, advantageous composition the mixture of polycarboxylic acids used in the process of the invention may comprise:

- methylglutaric acid, typically from 10.00 to 50.00 wt%, for instance from 25.00 to 40.00 wt%;
- methylglutaric anhydride, typically from 40.00 to 80.00 wt%, for instance from 55.00 to 70.00 wt%;
- ethylsuccinic anhydride, typically from 3.50 to 20.00 wt%, for instance from 3.90 to 9.70 wt%; and
- adipic acid, typically from 0.05 to 20.00 wt%, for instance from 0.10 to 0.30 wt%.

In the above composition methylglutaric anhydride may be 2-methylglutaric anhydride, 3-methylglutaric anhydride or a mixture of the two.

A part or the totality of the at least one polycarboxylic acid functional groups may be in the form of a carboxylic acid derivative, namely in the form of an anhydride, ester, or salt, for instance the salt of an alkaline metal (e.g. sodium or potassium) or an ammonium salt. The term "carboxylate" will be used hereinafter to indicate the derivatives of the carboxylic acid functional groups as defined above.

The at least one polycarboxylic acid used in the invention may optionally be neutralised, for instance by reaction with a base such as NaOH or KOH, before being used in the inventive process. This allows modifying the pH of the resulting silica.

The at least one polycarboxylic acid can be added to the filter cake during or after the liquefaction step of the process in the form of an aqueous solution.

The amount of the at least one polycarboxylic acid added to the filter cake in the inventive process, calculated with respect to the amount of silica (expressed in terms of $SiO_2$) in the filter cake, is generally of at least 0.50 wt%, even of at least 0.60 wt%, preferably of at least 0.70 wt%, more preferably at least 0.75 wt%. The amount of the at least one polycarboxylic acid added to the filter cake typically does not exceed 2.50 wt%, preferably 2.00 wt%, more preferably 1.75 wt%, and even more preferably it does not exceed 1.50 wt%, with respect to the amount of silica (expressed in terms of $SiO_2$) in the filter cake. The amount of the at least one polycarboxylic acid added to the filter cake may typically be in the range from 0.50 wt% to 2.00 wt%, even from 0.60 wt% to 1.75 wt% with respect to the amount of silica (expressed in terms of $SiO_2$) in the filter cake.

Preferably, the suspension of precipitated silica obtained after the liquefaction step exhibits, immediately before it is dried, a solids content of at most 27 wt%, in particular of at most 25 wt%, especially of at most 23 wt%, for example of at most 22 wt%.

The precipitated silica suspension obtained at the end of the liquefaction step is typically dried. Drying may be carried out using any means known in the art. Preferably, drying is carried out by spray drying. For this purpose, any suitable type of spray dryer may be used, especially a turbine spray dryer or a nozzle spray dryer (liquid-pressure or two-fluid nozzle). In general, when the filtration is carried out by means of a filter press, a nozzle spray dryer is used, and when the filtration is carried out by means of a vacuum filter, a turbine spray dryer is used.

When a nozzle spray dryer is used, the precipitated silica is usually in the form of approximately spherical beads.

After drying, a milling step may then be carried out on the recovered product. The precipitated silica that can then be obtained is generally in the form of a powder.

When a turbine spray dryer is used, the precipitated silica is typically in the form of a powder. The dried precipitated silica (especially by a turbine spray dryer) or milled as indicated above, may optionally be subjected to an agglomeration step. Said agglomeration step consists, for example, of direct compression, wet granulation (that is to say with the use of a binder such as water, a silica suspension, etc.), extrusion or, preferably, dry compacting. The silica that can then be obtained after the agglomeration step is generally in the form of granules.

The invention also relates to the precipitated silica obtained by the processes according to the invention.

In general, the precipitated silica of the invention exhibits, at its surface, molecules of the at least one polycarboxylic acid and/or of the carboxylates corresponding to the polycarboxylic acid(s) employed in the process.

Accordingly, a further object of the present invention is thus a precipitated silica comprising at least one polycarboxylic acid or derivatives thereof.

All definitions and preferences concerning the nature of the at least one polycarboxylic acid and its derivatives defined above in respect of the process for making precipitated silica equally apply to the precipitated silica of the invention.

In particular the inventive precipitated silica comprises, typically at its surface, molecules of methylglutaric acid, preferably of 2-methylglutaric acid, and/or their corresponding carboxylates.

The inventive precipitated silica may comprise typically at its surface, molecules of methylglutaric acid, preferably of 2-methylglutaric acid, in an amount from 60.00 to 96.00 wt%, of ethylsuccinic anhydride, in an amount of from 3.50 to 20.00 wt% and of adipic acid, in an amount of from 0.05 to 20.00 wt%, and/or their corresponding carboxylates.

Alternatively, the inventive precipitated silica may comprise typically at its surface, molecules of adipic acid, in an amount from 15.00 to 35.00 wt%, of glutaric acid, in an amount of from 40.00 to 60.00 wt% and of succinic acid, in an amount of from 15.00 to 25.00 wt%, and/or their corresponding carboxylates.

The precipitated silica of the invention can be used in particular as filler for polymer compositions, advanta-

6

geously providing them with a reduction in melt viscosity. The dynamic and mechanical properties of said polymer compositions are generally maintained unaltered, when not improved, over those of corresponding polymer compositions comprising precipitated silicas of the prior art.

The precipitated silica according to the invention exhibits a total content (C) of the at least one polycarboxylic acid and/or of the corresponding carboxylate, expressed as total carbon, of at least 0.15% by weight, in particular of at least 0.20% by weight. The content (C) of polycarboxylic acid(s) and/or corresponding carboxylate can be of at least 0.25% by weight, in particular of at least 0.30% by weight, for example of at least 0.35% by weight, indeed even of at least 0.45% by weight. The content (C) of polycarboxylic acid(s) and/or corresponding carboxylate, expressed as total carbon is not particularly limited, although it typically does not exceed 10.00% weight, in particular it does not exceed 5.00% by weight.

The total content of the polycarboxylic acid(s) and/or of the corresponding carboxylate, denoted (C), expressed as total carbon, can be measured using a carbon/sulfur analyzer, such as the Horiba EMIA 320 V2. The principle of the carbon/sulfur analyzer is based on the combustion of a solid sample in a stream of oxygen in an induction furnace (adjusted to approximately 170 mA) and in the presence of combustion accelerators (approximately 2 grams of tungsten (in particular Lecocel 763-266) and approximately 1 gram of iron).

The carbon present in the sample to be analyzed (weight of approximately 0.2 gram) combines with the oxygen to form $CO_2$, CO. These gases are subsequently analyzed by an infrared detector.

The moisture from the sample and the water produced during these oxidation reactions is removed by passing over a cartridge comprising a dehydrating agent (magnesium perchlorate) in order not to interfere with the infrared measurement.

The result is expressed as percentage by weight of element carbon.

The presence of the at least one polycarboxylic acid and/or of the corresponding carboxylate at the surface of the inventive precipitated silica can be determined by the presence of shoulders characteristic of the C-O and C=O bonds, visible in the infrared spectra, obtained in particular by surface (transmission) infrared or diamond-ATR infrared (in particular between 1540 and 1590 $cm^{-1}$ and between 1380 and 1420 $cm^{-1}$ for C-O, and between 1700 and 1750 $cm^{-1}$ for C=O).

The surface infrared analysis (by transmission) may be carried out on a Bruker Equinox 55 spectrometer on a pellet of pure product. The pellet is typically obtained after grinding the silica as is in an agate mortar and pelleting at 2 $T/cm^2$ for 10 seconds. The diameter of the pellet is generally 17 mm. The weight of the pellet is between 10 and 20 mg. The pellet thus obtained is placed in the high vacuum chamber ($10^{-7}$ mbar) of the spectrometer for one hour at ambient temperature before the analysis by transmission. Acquisition takes place under high vacuum (acquisition conditions: from 400 $cm^{-1}$ to 6000 $cm^{-1}$; number of scans: 100; resolution: 2 $cm^{-1}$).

The diamond-ATR analysis, may be carried out on a Bruker Tensor 27 spectrometer, and it consists in depositing, on the diamond, a spatula tip of pre-ground silica in an agate mortar and in then exerting a pressure. The infrared spectrum is recorded on the spectrometer in 20 scans, from 650 $cm^{-1}$ to 4000 $cm^{-1}$. The resolution is 4 $cm^{-1}$.

Depending on the source of the silicate starting material employed in the manufacturing process, the precipitated silica of the invention may contain additional elements, for instance metals. Among said additional elements mention may be made of aluminum.

As discussed above, an aluminum compound may be added to the filter cake in the liquefaction step. In such a case, the precipitated silica in accordance with the invention can in particular exhibit a total aluminum (Al) content of at least 0.20% by weight, typically of at least 0.30% by weight, in particular of at least 0.33% by weight. It generally exhibits an aluminum (Al) content of less than 1.00% by weight, in particular of at most 0.50% by weight, for example of at most 0.45% by weight.

When an aluminum compound is used during the liquefaction step it may be useful to define the ratio between the amount of the at least one polycarboxylic acid and the aluminum in the precipitated silica by means of the ratio (R) defined as by the following relationship:

$$(R) = N \times \frac{\left[\left(100 \times \frac{(C)}{C_T}\right) \times M_{Al}\right]}{\left((Al) \times M_{Ac}\right)},$$

in which:

- N is the mean number of carboxylic functional groups per polycarboxylic acid (for example, if all the polycarboxylic acids are dicarboxylic acids (respectively tricarboxylic acids), N is equal to 2 (respectively to 3)),
- (C) and (Al) are the contents as defined above,

- $C_T$ is the carbon content of the polycarboxylic acid(s),
- $M_{Al}$ is the molecular weight of aluminum,
- $M_{Ac}$ is the molecular weight of the polycarboxylic acid(s).

The ratio (R) may typically be between 0.4 and 3.5, in particular between 0.4 and 2.5. The ratio (R) can also be between 0.5 and 3.5, in particular between 0.5 and 2.5, especially between 0.5 and 2, for example between 0.8 and 2, indeed even between 0.8 and 1.8, or between 0.8 and 1.6.

The content of aluminum, denoted (Al), can be determined by wavelength dispersive X-ray fluorescence, for example with a Panalytical 2400 spectrometer or, preferably, with a Panalytical MagixPro PW2540 spectrometer. The Al determination by X-ray fluorescence is typically carried out on homogeneous powder of the precipitated silica, obtained for instance by grinding granules of the precipitated silica. The powder is analyzed as is in a vessel having a diameter of 40 mm with a polypropylene film with a thickness of 6 $\mu$m, under a helium atmosphere, at an irradiation diameter of 37 mm, the amount of silica analyzed is 9 cm$^3$. The measurement of the aluminum content, is obtained from the K$\alpha$ line (2$\theta$ angle = 145°, PE002 crystal, 550 $\mu$m collimator, gas flow detector, rhodium tube, 32 kV and 125 mA). The intensity of this line is proportional to the aluminum content. It is possible to employ a precalibration carried out using another measurement method, such as ICP-AES (Inductively Coupled Plasma - Atomic Emission Spectroscopy).

The aluminum content can also be measured by any other suitable method, for example by ICP-AES after dissolving in water in the presence of hydrofluoric acid.

In addition, the precipitated silica according to the invention can have a specific distribution of the coordination number of the aluminum, determined by solid aluminum NMR. In general, at most 85% by number, in particular at most 80% by number, in particular between 70% and 85% by number, for example between 70% and 80% by number, of the aluminum atoms of the silica according to the invention can exhibit a tetrahedral coordination number, that is to say, can be in a tetrahedral site. In particular, between 15% and 30% by number, for example between 20% and 30% by number, of the aluminum atoms of the silica according to the invention can exhibit a pentahedral or octahedral coordination number, that is to say, can be in a pentahedral or octahedral site.

The precipitated silica according to the invention has a BET specific surface of at least 45 m$^2$/g, in particular of at least 50 m$^2$/g and preferably of at least 55 m$^2$/g. The BET specific surface may be even of at least 60 m$^2$/g. The BET specific surface generally is at most 200 m$^2$/g, in particular at most 190 m$^2$/g, and even at most 180 m$^2$/g. In some embodiments, the BET specific surface may be at most 160 m$^2$/g, in particular at most 150 m$^2$/g, and even at most 130 m$^2$/g. The BET specific surface is determined according to the Brunauer - Emmett - Teller method described in The Journal of the American Chemical Society, Vol. 60, page 309, February 1938, and corresponding to the standard NF ISO 5794-1, Appendix D (June 2010).

In general, the precipitated silica according to the invention has a CTAB specific surface of between 40 and 200 m$^2$/g, in particular between 50 and 180 m$^2$/g, especially between 60 and 170 m$^2$/g. The CTAB specific surface can in particular be at most 150 m$^2$/g, for example between 60 and 130 m$^2$/g. The CTAB specific surface is the external surface, which can be determined according to the standard NF ISO 5794-1, Appendix G (June 2010).

The precipitated silica according to the invention may exhibit a BET specific surface/CTAB specific surface ratio of between 0.9 and 1.2, that is to say that it exhibits a low microporosity.

The precipitated silica according to the invention is characterized by the distribution of its pore volume and in particular in the distribution of the pore volume which is generated by the pores having diameters of less than or equal to 400 Å. The latter volume corresponds to the useful pore volume of the fillers employed in the reinforcement of elastomers. In general, it is observed that this silica, performs equally well in the form of substantially spherical beads (microbeads), powder or granules. The precipitated silica of the invention has a pore distribution such that the ratio, hereinafter referred to as V2/V1, between the pore volume generated by the pores having a diameter of between 175 and 275 Å (hereinafter referred to as V2) represents generally at least 15%, typically at least 19%, in particular at least 20% of the pore volume generated by the pores with diameters of less than or equal to 400 Å (hereinafter referred to as V1). The pore volume generated by the pores having a diameter of between 175 and 275 Å (V2) represents at most 49%, in particular at most 40% of the pore volume generated by the pores with diameters of less than or equal to 400 Å (V1). Advantageously the pore volume generated by the pores having a diameter of between 175 and 275 Å (V2) may be between 25% and 35% of the pore volume generated by the pores with diameters of less than or equal to 400 Å (V1).

The pore volumes and pore diameters are typically measured by mercury (Hg) porosimetry using a Micromeritics Autopore 9520 porosimeter and are calculated by the Washburn relationship with a contact angle theta equal to 130° and a surface tension gamma equal to 484 dynes/cm (standard DIN 66133). Each sample is pre-dried in an oven at 200°C for 2 hours before measurement is carried out.

The inventive precipitated silica is characterized in that it has a BET specific surface of between 45 and 200 m$^2$/g, in particular between 50 and 180 m$^2$/g, a V2/V1 ratio of at most 49%, preferably between 15 and 40%; and it comprises at least one polycarboxylic acid as detailed above.

In an embodiment of the invention, the precipitated silica according to the invention is characterized in that it has:

- a BET specific surface of between 45 and 200 m$^2$/g, in particular between 50 and 180 m$^2$/g;
- a V2/V1 ratio of at most 49%, preferably between 15% and 40%; and
- a content (C) of polycarboxylic acid(s) and/or corresponding carboxylate, expressed as total carbon, of at least 0.15% by weight, in particular of at least 0.20% by weight.

In another embodiment, the precipitated silica according to the invention is characterized in that it has:

- a BET specific surface of between 45 and 200 m$^2$/g, in particular between 50 and 180 m$^2$/g;
- a V2/V1 ratio of at most 49%, preferably between 15% and 40%; and
- a content (C) of polycarboxylic acid(s) and/or corresponding carboxylate, expressed as total carbon, of at least 0.15% by weight, in particular of at least 0.20% by weight; and
- optionally, a content of aluminum (Al) of at least 0.20% by weight.

In a further embodiment, the precipitated silica according to the invention is characterized in that it has:

- a BET specific surface of between 45 and 200 m$^2$/g, in particular between 50 and 180 m$^2$/g;
- a CTAB specific surface between 50 and 180 m$^2$/g;
- a V2/V1 ratio of at most 49%, preferably between 15% and 40%; and
- a content (C) of polycarboxylic acid(s) and/or corresponding carboxylate, expressed as total carbon, of at least 0.15% by weight, in particular of at least 0.20% by weight; and
- optionally, a content of aluminum (Al) of at least 0.20% by weight.

Preferably, the precipitated silica according to the invention exhibits a dispersive component of the surface energy $\gamma_s{}^d$ of less than 43 mJ/m$^2$, in particular of less than 42 mJ/m$^2$.

It can exhibit a dispersive component of the surface energy $\gamma_s{}^d$ of at least 25 mJ/m$^2$ and of less than 43 mJ/m$^2$, in particular of between 27 and 43 mJ/m$^2$, for example of between 28 and 42 mJ/m$^2$.

The dispersive component of the surface energy $\gamma_s{}^d$ is determined by inverse gas chromatography on granules, having an average size of 106 $\mu$m - 250 $\mu$m. The technique used to calculate the dispersive component of the surface energy $\gamma_s{}^d$ is Inverse Gas Chromatography at Infinite Dilution (IGC-ID) at 110°C using a series of alkanes (normal alkanes) ranging from 6 to 10 carbon atoms, a technique based on gas chromatography but where the roles of the mobile phase and of the stationary phase (packing) are reversed. In this instance, the stationary phase in the column is replaced by the (solid) material to be analyzed, in this instance the precipitated silica. With regard to the mobile phase, it consists of the carrier gas (helium) and of the "probe" molecules chosen as a function of their interaction capability. The measurements are successively carried out with each probe molecule. For each measurement, each probe molecule is injected into the column, in a very small amount (infinite dilution), as a mixture with methane. Methane is used to determine to, the dead time of the column.

The net retention time ($t_N$) of the injected probe is obtained by subtraction of the dead time to from the retention time of the probe. Physically, $t_N$ corresponds to the mean time which the probe molecule has spent in contact with the stationary phase (the solid analyzed). For each probe molecule injected, three net retention times $t_N$ are measured. The mean value and the corresponding standard deviation are used to determine the specific retention volumes ($V_g{}^0$) on the basis of the following relationship (formula [1]).

$$V_g^0 = \frac{D_c t_N}{M_S} \mathbf{x} \frac{273.15}{T}$$

formula [1]

The specific retention volume $V_g{}^0$ corresponds to the volume of carrier gas (referred to 0°C) necessary to elute the probe molecule per 1 gram of stationary phase (solid examined). This standard quantity makes it possible to compare the results, whatever the flow rate of carrier gas and the weight of stationary phase used. In formula [1]: $M_S$ the weight of solid in the column, $D_c$ the flow rate of carrier gas and $T$ the measurement temperature.

The specific retention volume is subsequently used to calculate $\Delta G_a$, the variation in free enthalpy of adsorption of the probe, according to the formula [2], wherein R is the universal ideal gas constant (R = 8.314 J.K$^{-1}$.mol$^{-1}$), on the solid present in the column.

$$\Delta G_a = \text{RTLn}(V_g^0) \qquad \text{formula [2]}$$

This quantity $\Delta G_a$ is the starting point for the determination of the dispersive component of the surface energy ($\gamma_s^d$). The latter is obtained by plotting the straight line representing the variation in free enthalpy of absorption ($\Delta G_a$) as a function of the carbon number $n_c$ of the n-alkane probes, as shown in the table below.

Table 1

| n-Alkane probes | $n_c$ |
|---|---|
| n-hexane | 6 |
| n-heptane | 7 |
| n-octane | 8 |
| n-nonane | 9 |
| n-decane | 10 |

It is then possible to determine the dispersive component of the surface energy $\gamma_s^d$ from the slope $\Delta G_a^{CH2}$ of the straight line of the normal alkanes, corresponding to the free enthalpy of adsorption of the methylene group, obtained for a measurement temperature of 110°C.

The dispersive component of the surface energy $\gamma_s^d$ is then related to the free enthalpy of adsorption $\Delta G_a^{cH2}$ of the methylene group (Dorris and Gray method, J. Colloid Interface Sci., 77 (180), 353-362) by the following relationship:

$$\gamma_S^d = \frac{(\Delta G_a^{CH_2})^2}{4 N_A^2 . a_{CH_2}^2 . \gamma_{CH_2}}$$

wherein $N_A$ is Avogadro's number (6.02 x $10^{23}$ mol$^{-1}$), $\alpha_{CH2}$ is the area occupied by an adsorbed methylene group (0.06 nm$^2$) and $\gamma_{CH2}$ is the surface energy of a solid consisting solely of methylene group and determined on polyethylene (35.6 mJ/m$^2$ at 20°C).

The precipitated silica according to the invention exhibits a water uptake of at least 6.0%, in particular of at least 7.0%, especially of at least 7.5%, for example of at least 8.0%. The water uptake generally does not exceed 15.0%.

In an additional embodiment of the invention, the inventive precipitated silica is characterized in that it has:

- a BET specific surface of between 45 and 200 m$^2$/g, in particular between 50 and 160 m$^2$/g, especially between 55 and 130 m$^2$/g;
- a V2/V1 ratio of at most 49%, preferably between 15% and 40%; and
- a content (C) of polycarboxylic acid and/or corresponding carboxylate, expressed as total carbon, of at least 0.15% by weight, in particular of at least 0.20% by weight;
- optionally, a content of aluminum (Al) of at least 0.30% by weight; and
- a water uptake of at least 6.0%.

The technique used to measure the water uptake consists generally in placing the pre-dried silica sample under given relative humidity conditions for a predetermined time; the silica then hydrates, which causes the weight of the sample to change from an initial value w (in the dried state) to a final value w + dw. "Water uptake" of a silica specifically denotes, in particular throughout the continuation of the account, the dw/w ratio (that is to say, the weight of water incorporated in the sample with respect to the weight of the sample in the dry state), expressed as percentage, calculated for a silica sample subjected to the following conditions during the measurement method: preliminary drying: 8 hours, at 150°C; hydration: 24 hours, at 20°C, and under a relative humidity of 70%.

The experimental protocol employed consists in successively: precisely weighing approximately 2 grams of the silica to be tested; drying, for 8 hours, the silica thus weighed out in an oven adjusted to a temperature of 105°C; determining the weight w of the silica obtained on conclusion of this drying operation; placing, for 24 hours, at 20°C, the dried silica in a closed container, such as a desiccator, comprising a water/glycerol mixture, so that the relative humidity of the closed medium is 70%; determining the weight (w + dw) of the silica obtained subsequent to this treatment at 70% relative humidity for 24 hours, the measurement of this weight being carried out immediately after having removed the silica from the desiccator, so as to prevent variation in the weight of the silica under the influence of the change in hygrometry between the medium at 70% relative humidity and the atmosphere of the laboratory.

In general, the precipitated silica according to the invention exhibits a high ability to disperse (in particular in elastomers) and to deagglomerate.

The precipitated silica according to the invention can exhibit a diameter $\varnothing_{50M}$, after deagglomeration with ultrasound, of at most 5.5 $\mu$m, preferably of at most 5.0 $\mu$m, in particular of between 3.5 and 5.0 $\mu$m.

The precipitated silica according to the invention can exhibit an ultrasound deagglomeration factor $F_{DM}$ of greater than 5.5 ml, in particular of greater than 7.5 ml, for example of greater than 12 ml.

In general, the ability of silica to disperse and to deagglomerate can be quantified by means of the specific deagglomeration test described below.

A particle size measurement is carried out (by laser diffraction) on a suspension of silica deagglomerated beforehand by ultrasonication; the ability of the silica to deagglomerate (cleavage of the objects from 0.1 to several tens of microns) is thus measured. The deagglomeration under ultrasound is carried out using a Vibracell Bioblock (600 W) sonicator equipped with a probe having a diameter of 19 mm. The particle size measurement is carried out by laser diffraction using a MALVERN (Mastersizer 2000) particle sizer, employing the Fraunhofer theory. One gram (+/- 0.1 gram) of silica are introduced into a 50 ml beaker (height: 7.5 cm and diameter: 4.5 cm) and the weight is made up to 50 grams by addition of 49 grams (+/- 0.1 gram) of deionized water. A 2% aqueous silica suspension is thus obtained. The aqueous silica suspension is thus deagglomerated by ultrasound sonication for 7 minutes. The particle size measurement is subsequently carried out by introducing, into the vessel of the particle sizer all the obtained suspension.

The median diameter $\varnothing_{50M}$ (or median diameter Malvern), after deagglomeration with ultrasound (2 g in 50 ml water), is such that 50% of the particles by volume have a size of less than $\varnothing_{50M}$ and 50% have a size of greater than $\varnothing_{50M}$. The value of the median diameter $\varnothing_{50M}$ which is obtained decreases in proportion as the ability of the silica to deagglomerate increases.

It is also possible to determine the ratio 10 x value of blue laser obscuration/value of red laser obscuration, this optical density corresponding to the true value detected by the particle sizer during the introduction of the silica. This ratio (Malvern deagglomeration factor $F_{DM}$) is indicative of the content of particles with a size of less than 0.1 $\mu$m which are not detected by the particle sizer. This ratio increases in proportion as the ability of the silica to deagglomerate increases.

The precipitated silica according to the invention preferably exhibits a pH of between 3.5 and 7.5, more preferably still between 4.0 and 7.0.

The pH is measured according to a modification of standard ISO 787/9 (pH of a 5% suspension in water) as follows: 5 grams of silica are weighed to within about 0.01 gram into a 200 ml beaker. 95 ml of water, measured from a graduated measuring cylinder, are subsequently added to the silica powder. The suspension thus obtained is vigorously stirred (magnetic stirring) for 10 minutes. The pH measurement is then carried out.

The precipitated silica according to the invention can be provided in any physical state, that is to say that it can be provided in the form of substantially spherical beads (microbeads), of a powder or of granules.

It can thus be provided in the form of substantially spherical beads with a mean size of at least 80 $\mu$m, preferably of at least 150 $\mu$m, in particular of between 150 and 270 $\mu$m; this mean size is determined according to the standard NF X 11507 (December 1970) by dry sieving and determination of the diameter corresponding to a cumulative oversize of 50%.

It can also be provided in the form of a powder with a mean size of at least 3 $\mu$m, in particular of at least 10 $\mu$m, preferably of at least 15 $\mu$m.

It can be provided in the form of granules with a size of at least 1 mm, for example of between 1 and 10 mm, in particular along the axis of their greatest dimension.

The silica according to the invention is preferably obtained by the process described above.

Advantageously, the precipitated silica according to the present invention or obtained by the process according to the invention described above confer to the polymeric (elastomeric) compositions into which they are introduced, a highly satisfactory compromise in properties, in particular a reduction in their viscosity. Preferably, they exhibit a good ability to disperse and to deagglomerate in polymeric, preferably elastomeric, com positions.

The precipitated silica according to the present invention or (capable of being) obtained by the process described above according to the invention can be used in numerous applications.

The inventive precipitated silica can be employed, for example, as catalyst support, as absorbent for active materials (in particular support for liquids, especially used in food, such as vitamins (vitamin E) or choline chloride), in polymer, especially elastomer, compositions, as viscosifying, texturizing or anticaking agent, as battery separator component, or as additive for toothpaste, concrete or paper.

However, the inventive precipitated silica finds a particularly advantageous application in the reinforcement of natural or synthetic polymers.

The polymer compositions in which it can be employed, in particular as reinforcing filler, are generally based on one or more polymers or copolymers, in particular on one or more elastomers, preferably exhibiting at least one glass transition temperature of between -150°C and +300°C, for example between -150°C and +20°C.

The expression "copolymer" is used herein to refer to polymers comprising recurring units deriving from at least two monomeric units of different nature.

Mention may in particular be made, as possible polymers, of diene polymers, in particular diene elastomers.

For example, use may be made of polymers or copolymers deriving from aliphatic or aromatic monomers, comprising at least one unsaturation (such as, in particular, ethylene, propylene, butadiene, isoprene, styrene, acrylonitrile, isobutylene or vinyl acetate), polybutyl acrylate, or their mixtures; mention may also be made of functionalized elastomers, that is elastomers functionalized by chemical groups positioned along the macromolecular chain and/or at one or more of its ends (for example by functional groups capable of reacting with the surface of the silica), and halogenated polymers. Mention may be made of polyamides, ethylene homo- and copolymers, propylene homo- and copolymers.

The polymer may be in any form. It may be a bulk polymer, a polymer latex or else a solution of a polymer in water or in any other appropriate dispersing liquid.

Among diene elastomers mention may be made, for example, of polybutadienes (BRs), polyisoprenes (IRs), butadiene copolymers, isoprene copolymers, or their mixtures, and in particular styrene/butadiene copolymers (SBRs, in particular ESBRs (emulsion) or SSBRs (solution)), isoprene/butadiene copolymers (BIRs), isoprene/styrene copolymers (SIRs), isoprene/butadiene/styrene copolymers (SBIRs), ethylene/propylene/diene terpolymers (EPDMs), and also the associated functionalized polymers (exhibiting, for example, pendant polar groups or polar groups at the chain end, which can interact with the silica).

Mention may also be made of natural rubber (NR) and epoxidized natural rubber (ENR).

The polymer compositions can be vulcanized with sulfur (vulcanisates are then obtained) or crosslinked, in particular with peroxides or other crosslinking systems (for example diamines or phenolic resins).

In general, the polymer compositions additionally comprise at least one (silica/polymer) coupling agent and/or at least one covering agent; they can also comprise, inter alia, an antioxidant.

Use may in particular be made, as coupling agents, as nonlimiting examples, of "symmetrical" or "unsymmetrical" silane polysulfides; mention may more particularly be made of bis(($C_1$-$C_4$)alkoxyl($C_1$-$C_4$)alkylsilyl($C_1$-$C_4$)alkyl) polysulfides (in particular disulfides, trisulfides or tetrasulfides), such as, for example, bis(3-(trimethoxysilyl)propyl) polysulfides or bis(3-(triethoxysilyl)propyl) polysulfides, such as triethoxysilylpropyl tetrasulfide. Mention may also be made of monoethoxydimethylsilylpropyl tetrasulfide. Mention may also be made of silanes comprising masked or free thiol functional groups.

The coupling agent can be grafted beforehand to the polymer. It can also be employed in the free state (that is to say, not grafted beforehand) or grafted at the surface of the silica. It is the same for the optional covering agent.

The coupling agent can optionally be combined with an appropriate "coupling activator", that is to say a compound which, mixed with this coupling agent, increases the effectiveness of the latter.

The proportion by weight of the inventive silica in the polymer composition can vary within a fairly wide range. It normally represents from 10% to 200% by weight, in particular from 20% to 150% by weight, especially from 20% to 80% by weight (for example from 30% to 70% by weight) or from 80% to 120% by weight (for example from 90% to 110% by weight), of the amount of the polymer(s).

The silica according to the invention can advantageously constitute all of the reinforcing inorganic filler and even all of the reinforcing filler of the polymer composition.

However, this silica according to the invention can optionally be combined with at least one other reinforcing filler, such as, in particular, a commercial highly dispersible silica, such as, for example, Zeosil® Z1165MP or Zeosil® Z1115MP (commercially available from Solvay), a treated precipitated silica (for example, a precipitated silica "doped" using a cation, such as aluminum); another reinforcing inorganic filler, such as, for example, alumina, indeed even a reinforcing organic filler, in particular carbon black (optionally covered with an inorganic layer, for example of silica). The silica according to the invention then preferably constitutes at least 50% by weight, indeed even at least 80% by weight, of the total amount of the reinforcing filler.

The compositions comprising the precipitated silica of the invention may be used for the manufacture of a number of articles. Non-limiting examples of finished articles comprising at least one of (in particular based on) polymer composition described above (in particular based on the abovementioned vulcanisates), are for instance of footwear soles (preferably in the presence of a (silica/polymer) coupling agent, for example triethoxysilylpropyl tetrasulfide), floor coverings, gas barriers, flame-retardant materials and also engineering components, such as rollers for cableways, seals for domestic electrical appliances, seals for liquid or gas pipes, braking system seals, pipes (flexible), sheathings (in particular cable sheathings), cables, engine supports, battery separators, conveyor belts, transmission belts or, preferably, tires, in particular tire treads (especially for light vehicles or for heavy-goods vehicles (for example trucks)).

Should the disclosure of any patents, patent applications, and publications conflict with the description of the present application to the extent that it may render a term unclear, the present description shall take precedence.

The invention will be now described in more detail with reference to the following examples whose purpose is merely illustrative and not limitative of the scope of the invention.

EXAMPLES

EXAMPLE 1

A silica suspension was prepared according to the process described in Example 1 of EP396450A wherein the initial water volume in the vessel was 500 l, the amount of sodium sulfate 17 kg, the reaction temperature was set at 92°C and the final pH was between 5.0 and 5.5. The silica suspension was filtered and washed on a vacuum filter to obtain a filter cake which was divided in three parts.

Prior to the liquefaction operation, a solution in water of a polycarboxylic acid mixture (34 wt%) was prepared by dissolving (at 35°C) a mixture of polycarboxylic acids having the following composition: 94.8 wt% of 2-methylglutaric acid, 4.9 wt% of ethylsuccinic acid, and 0.2 wt% of adipic acid and 0.1 wt% of others. The solution is hereinafter referred to as "MGA solution".

A first part of the filter cake was subjected to a liquefaction operation in a continuous vigorously stirred reactor with simultaneous addition to the cake of 34 grams of the MGA solution (MGA mixture/$SiO_2$ ratio by weight of 1.0%) and of 24 g of a sodium aluminate solution (Al/$SiO_2$ ratio by weight of 0.30%).

This disintegrated cake was subsequently dried using a nozzle atomizer by spraying the disintegrated cake through a 2.5 mm nozzle with a pressure of 1 bar under the following mean conditions of flow rate and of temperatures:

Mean inlet temperature: 250°C
Mean outlet temperature: 135°C
Mean flow rate: 15 l/h.

The silica powder thus obtained was transformed into granules using a granulating equipment Alexanderwerk WP 120*40 with compacting rolls 120 mm long and 40 mm wide. The powder was conveyed by means of a 400 mm long screw turning at a speed of 60 rpm towards the compacting rolls turning at a speed of 3 rpm and applying a hydraulic pressure of 23 bar. A sieve with a cut at 710 $\mu$m at the end of the granulating operation allowed the separation of the residual fine powders.

The characteristics of the inventive silica S1 obtained were the following:

| | |
|---|---|
| Content of polycarboxylic acid + carboxylate (C) (%) | 0.47 |
| Aluminum (Al) content (%) | 0.32 |
| BET ($m^2$/g) | 75 |
| CTAB ($m^2$/g) | 85 |
| V2/V1 (%) | 27 |
| Water uptake (%) | 8.7 |
| $\gamma_s{}^d$ (mJ/$m^2$) | 40 |
| pH | 6.3 |

EXAMPLE 2

The second part of the filter cake obtained in Example 1 was subjected to a liquefaction operation in a continuous vigorously stirred reactor with simultaneous addition to the cake of 34 grams of the MGA solution (MGA mixture/$SiO_2$ ratio by weight of 1.0%).

This disintegrated cake was subsequently dried using a nozzle atomizer by spraying the disintegrated cake through a 2.5 mm nozzle with a pressure of 1 bar under the following mean conditions of flow rate and of temperatures:

Mean inlet temperature: 250°C
Mean outlet temperature: 135°C
Mean flow rate: 15 l/h.

Granules were obtained as described in Example 1. The characteristics of the inventive silica S2 obtained were the following:

| | |
|---|---|
| Content of polycarboxylic acid + carboxylate (C) (%) | 0.42 |
| Aluminum (Al) content (%) | 0.05 |
| BET ($m^2/g$) | 82 |
| CTAB ($m^2/g$) | 82 |
| V2/V1 (%) | 31 |
| Water uptake (%) | 8.4 |
| $\gamma_s^d$ ($mJ/m^2$) | 33 |
| pH | 4.3 |

COMPARATIVE EXAMPLE 1

The third part of the filter cake obtained in Example 1 was subjected to a liquefaction operation in a continuous vigorously stirred reactor with simultaneous addition to the cake of sulfuric acid and of a sodium aluminate solution (Al/$SiO_2$ ratio by weight of 0.30%).

This disintegrated cake was subsequently dried using a nozzle atomizer by spraying the disintegrated cake through a 2.5 mm nozzle with a pressure of 1 bar under the following mean conditions of flow rate and of temperatures:

Mean inlet temperature: 250°C

Mean outlet temperature: 135°C

Mean flow rate: 15 l/h.

Granules were obtained as described in Example 1. The characteristics of the inventive silica CS1 obtained were the following:

| | |
|---|---|
| Content of polycarboxylic acid + carboxylate (C) (%) | 0.00 |
| Aluminum (Al) content (%) | 0.32 |
| BET ($m^2/g$) | 82 |
| CTAB ($m^2/g$) | 84 |
| V2/V1 (%) | 28 |
| Water uptake (%) | 9.1 |
| $\gamma_s^d$ ($mJ/m^2$) | 52 |
| pH | 6.4 |

EXAMPLES 3 AND 4 AND COMPARATIVE EXAMPLE 2

The following materials were used in the preparation of SBR-based elastomeric compositions:

SBR: SBR Buna VSL5025-2 from Lanxess; with 50 +/- 4% of vinyl units; 25 +/- 2% of styrene units; Tg in the vicinity of -20°C; 100 phr of SBR extended with 37.5 +/- 2.8% by weight of oil/
BR: oil Buna CB 24 from Lanxess
S1: precipitated silica according to the present invention prepared according to Example 1
S2: precipitated silica according to the present invention prepared according to Example 2
CS1: precipitated silica according to the prior art prepared according to Comparative Example 1
Coupling agent: Luvomaxx TESPT from Lehvoss France sari
Plasticizer: Nytex 4700 naphtenic plasticizer from Nynas
Antioxidant: N-(1,3-Dimethylbutyl)-N-phenyl-para-phenylenediamine ; Santoflex 6-PPD from Flexsys
DPG: Diphenylguanidine; Rhenogran DPG-80 from RheinChemie

CBS: N-Cyclohexyl-2-benzothiazolesulfenamide; Rhenogran CBS-80 from RheinChemie

The compositions of the elastomeric blends, expressed as parts by weight per 100 parts of elastomers (phr), are shown in Table I below, were prepared in an internal mixer of Brabender type (380 ml) according to the following Procedure.

Procedure for the preparation of rubber compositions

The compositions prepared in two successive phases: a first phase consisting of a high-temperature thermo-mechanical working, followed by a second phase of mechanical working at temperatures of less than 110°C. This phase makes it possible the introduction of the vulcanization system.

The first phase was carried out using a mixing device, of internal mixer type, of Brabender brand (capacity of 380 ml). The filling coefficient was 0.6. The initial temperature and the speed of the rotors were set on each occasion so as to achieve mixture dropping temperatures of approximately 140-160°C.

During the first phase it was possible to incorporate, in a first pass, the elastomers and then the reinforcing filler (introduction in instalments) with the coupling agent and the stearic acid. For this pass, the duration was between 4 and 10 minutes.

After cooling the mixture (to a temperature of less than 100°C), a second pass made it possible to incorporate the zinc oxide and the protecting agents/antioxidant. The duration of this pass was between 2 and 5 minutes.

After cooling the mixture (to a temperature of less than 100°C), the vulcanization system (sulfur and accelerators, such as CBS) was added to the mixture. The second phase was carried out in an open mill, preheated to 50°C. The duration of this phase was between 2 and 6 minutes.

Each final mixture was subsequently calendered in the form of plaques with a thickness of 2-3 mm.

Table I

| Composition | Example 3 | Example 4 | Comp. Ex. 2 |
|---|---|---|---|
| SBR | 82.5 | 82.5 | 82.5 |
| BR | 40.0 | 40.0 | 40.0 |
| S1 | 73.0 | | |
| S2 | | 73.0 | |
| CS1 | | | 73.0 |
| Coupling agent | 3.0 | 3.0 | 3.0 |
| Carbon black | 3.0 | 3.0 | 3.0 |
| ZnO | 2.5 | 2.5 | 2.5 |
| Stearic acid | 2.0 | 2.0 | 2.0 |
| Antioxidant | 3.9 | 3.9 | 3.9 |
| DPG | 1.0 | 1.0 | 1.0 |
| CBS | 1.5 | 1.5 | 1.5 |
| Sulphur | 1.4 | 1.4 | 1.4 |

Subsequently, the mechanical and dynamic properties of the mixtures vulcanized at the curing optimum (T98) were measured according to the following methods.

**Rheological properties**

**Viscosity of the raw mixtures**

Mooney viscosity was measured on the compositions in the raw state at 100°C using an MV 2000 rheometer. Mooney stress-relaxation rate was according to the standard NF ISO 289.

The value of the torque, read at the end of 4 minutes after preheating for one minute (Mooney Large (1+4) - at 100°C), is shown in Table II. The test was carried out on the raw mixtures after aging for 12 days at a temperature of 23 +/- 3°C.

Table II

| Compositions | | Example 3 | Example 4 | Comp. Ex. 2 |
|---|---|---|---|---|
| ML (1+4) - 100°C | Initial | 62 | 61 | 67 |
| Mooney relaxation | Initial | 0.409 | 0.407 | 0.403 |
| ML (1+4) - 100°C | After 7 days (23 +/- 3°C) | 64 | 60 | 71 |
| Mooney relaxation | After 7 days (23 +/- 3°C) | 0.403 | 0.403 | 0.348 |
| ML (1+4) - 100°C | After 21 days (23 +/- 3°C) | 64 | 62 | 82 |
| Mooney relaxation | After 21 days (23 +/- 3°C) | 0.393 | 0.409 | 0.284 |

It was found that compositions comprising the precipitated silicas S1 and S2 of the present invention (Examples 3 and 4) have a reduced initial raw viscosity with respect to compositions comprising a precipitated silica of the prior art. The lower viscosity of the compositions comprising the inventive precipitated silicas S1 and S2 with respect to reference compositions is even more evident after ageing. In particulat the compositions comprising the inventive precipitated silica show a reduced variation of viscosity with ageing. A satisfactory Mooney relaxation over time is also observed.

**Rheometry Testing**

The measurements were carried out on the compositions in the raw state. Rheology testing was carried out at 160°C using a Monsanto ODR rheometer according to standard NF ISO 3417. According to this test, the test composition was placed in the test chamber (completely filling the chamber) regulated at the temperature of 160°C for 30 minutes, and the resistive torque opposed by the composition to a low-amplitude (3°) oscillation of a biconical rotor included in the test chamber is measured.
The following parameters were determined from the curve of variation in the torque as a function of time:

- the minimum torque (Tmin), which reflects the viscosity of the composition at the temperature under consideration;
- the maximum torque (Tmax);
- the delta torque ($\Delta T$ = Tmax - Tmin), which reflects the degree of crosslinking brought about by the action of the crosslinking system and, when needed, of the coupling agents;
- the time T98 necessary to obtain a degree of vulcanization corresponding to 98% of complete vulcanization (this time is taken as vulcanization optimum); and
- the scorch time TS2, corresponding to the time which is required increase the torque of 2 points above the minimum torque at the temperature under consideration (160°C) and which reflects the time during which it is possible to process the raw mixture at this temperature without having initiation of vulcanization.

The results obtained for the compositions of Examples 3 and 4 and Comparative Example 2 are shown in Table III.

Table III

| | Example 3 | Example 4 | Comparative Example 2 |
|---|---|---|---|
| Tmin (dN.m) | 12.2 | 11.8 | 12.9 |
| Tmax (dN.m) | 60.2 | 60.5 | 56.2 |
| Delta torque (dN.m) | 47.9 | 48.7 | 43.3 |
| TS2 (min) | 5.9 | 5.9 | 5.0 |
| T98 (min) | 18.4 | 15.0 | 15.8 |

It was found that the compositions according to the invention (Examples 3 and 4) exhibit a satisfactory combination of rheological properties.
In particular, while having a reduced raw viscosity, they are also characterized by a lower minimum torque value and a higher maximum torque value than those of the reference composition, which reflect a greater processability of the composition. A larger processability window of the inventive compositions is also due to the higher scorch time value TS2.

**Mechanical properties of the vulcanisates**

The measurements were carried out on the optimally vulcanized compositions (T98) obtained at a temperature of 160°C.

Uniaxial tensile tests were carried out in accordance with standard NF ISO 37 with test specimens of H2 type at a rate of 500 mm/min on an Instron 5564 device. The x% moduli, corresponding to the stress measured at x% of tensile strain, were expressed in MPa.

A reinforcing index (RI) was determined which is equal to the ratio of the modulus at 300% strain to the modulus at 100% strain.

The Shore A hardness measurement on the vulcanisates was carried out according to standard ASTM D 2240, using a measurement time of 15 seconds.

The properties are reported in Table IV.

Table IV

| Compositions | Example 3 | Example 4 | Comp. Example 2 |
|---|---|---|---|
| 10% Modulus (MPa) | 0.4 | 0.4 | 0.4 |
| 100% Modulus (MPa) | 3.0 | 2.8 | 2.6 |
| 300% Modulus (MPa) | 13.4 | 12.9 | 12.0 |
| RI | 4.5 | 4.6 | 4.6 |
| Shore A hardness - 15 s (pts) | 56 | 54 | 55 |

The use of a precipitated silica of the invention (Examples 3 and 4) makes it possible to obtain a level of reinforcement which is comparable with respect to the control mixture.

**Determination of the dynamic properties of the vulcanisates**

The dynamic properties were measured on a viscosity analyser (Metravib VA3000) according to standard ASTM D5992.

The value for loss factor (tan $\delta$) and of the complex modulus (E*) were recorded on vulcanized samples (cylindrical test specimen with a cross section of 95 mm$^2$ and a height of 14 mm). The sample was subjected at the start to a 10% pre-strain and then to a sinusoidal strain in alternating compression of plus or minus 2%. The measurements were carried out at 60°C and at a frequency of 10 Hz.

The data obtained for the compositions of Examples 3 and 4 and Comparative Example 2 are reported in Table V.

Table V

| Compositions | Example 3 | Example 4 | Comp. Example 2 |
|---|---|---|---|
| E* - 60°C - 10 Hz (MPa) | 5.3 | 4.6 | 5.0 |
| Tan $\delta$, 60°C, 10 Hz | 0.08 | 0.09 | 0.08 |

The dynamic properties of the compositions comprising the inventive silicas S1 and S2 are comparable to those of the reference composition.

The data in Tables II to V show that compositions comprising the precipitated silica of the invention are characterized by a gain in raw viscosity which remains more stable upon storage over time with respect to the standard reference and a larger processability window.

## Claims

1. A precipitated silica with a BET specific surface of between 45 and 200 m$^2$/g, a V2/V1 ratio between the pore volume generated by the pores having a diameter of between 175 and 275 Å (V2) and the pore volume generated by the pores with diameters of less than or equal to 400 Å (V1) of at most 49% and comprising at least one polycarboxylic acid selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid, glutaconic acid, malic acid, phthalic acid, ortophthalic acid, isophthalic acid, trimesic acid, trimellitic acid.

2. The precipitated silica according to claim 1 wherein the at least one polycarboxylic acid is selected from the group consisting of malonic acid, tricarballylic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid.

3. The precipitated silica according to anyone of claims 1 or 2 comprising a mixture of at least two polycarboxylic acids.

4. The precipitated silica according to anyone of claims 1 to 3 wherein the total content (C) of polycarboxylic acid and/or corresponding carboxylate, expressed as total carbon, is of at least 0.15% by weight.

5. The precipitated silica according to anyone of claims 1 to 4 further **characterized in that** it has a water uptake of at least 6.0%.

6. The precipitated silica according to anyone of claims 1 to 5 **characterized in that** it has a dispersive component of the surface energy $\gamma_s^d$ of less than 43 mJ/m$^2$.

7. A process for the production of precipitated silica of anyone of claims 1 to 6, said process comprising reacting at least one silicate with at least one acidifying agent, to provide a silica suspension which comprises the steps of:

   (i) providing a base mixture comprising a portion of the total amount of the silicate involved in the reaction and an electrolyte, wherein the concentration of silicate, expressed as $SiO_2$, in said base mixture is less than 120 g/l and the concentration of the electrolyte in said base mixture is between 15 and 25 g/l;
   (ii) adding an amount of an acidifying agent to said base mixture to obtain a pH value of between 7.0 and 8.5;
   (iii) simultaneously adding any remaining silicate and any required additional acidifying agent to said base mixture while maintaining the pH value between 7.0 and 8.5;
   (iv) further adding an acidifying agent to obtain a pH value of between 4.0 and 6.0 to obtain a silica suspension;
   (v) submitting said silica suspension to filtration to provide a filter cake;
   (vi) submitting said filter cake to a liquefaction step, optionally comprising the addition of an aluminum compound, to obtain a suspension of precipitated silica; and
   (vii) optionally, drying the precipitated silica obtained after the liquefaction step; wherein at least one polycarboxylic acid selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid, glutaconic acid, malic acid, phthalic acid, ortophthalic acid, isophthalic acid, trimesic acid, trimellitic acid is added to the filter cake during or after the liquefaction step and wherein the reacting of the at least one silicate with the at least one acidifying agent is carried out at a constant temperature comprised between 80 and 97°C.

8. The process of claim 7 wherein an aluminum compound is added during the liquefaction step.

9. The process of claim 8 wherein the at least one polycarboxylic acid and the aluminum compound are added at the same time.

10. The process according to anyone of the preceding claims wherein the at least one polycarboxylic acid is selected from the group consisting of malonic acid, tricarballylic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid.

11. A polymer composition comprising the precipitated silica of any one of claims 1 to 6.

12. An article comprising at least one composition as claimed in claim 11.

13. The article of claim 12 consisting of a footwear sole, a floor covering, a gas barrier, a flame-retardant material, a roller for cableways, a seal for domestic electrical appliances, a seal for liquid or gas pipes, a braking system seal, a pipe, a sheathing, a cable, an engine support, a battery separator, a conveyor belt, a transmission belt or, preferably, a tire.

**Patentansprüche**

1. Fällungskieselsäure mit einer spezifischen BET-Oberfläche zwischen 45 und 200 $m^2$/g und einem $V_2/V_1$-Verhältnis zwischen dem durch die Poren mit einem Durchmesser von zwischen 175 und 275 Å erzeugten Porenvolumen (V2) und dem durch die Poren mit einem Durchmesser von kleiner als oder gleich 400 Å erzeugten Porenvolumen (V1) von höchstens 49 %, umfassend mindestens eine Polycarbonsäure aus der Gruppe bestehend aus Malonsäure, Tricarballylsäure, Glutarsäure, Adipinsäure, Pimelinsäure, Suberinsäure, Azelainsäure, Sebacinsäure, Methylbernsteinsäure, Ethylbernsteinsäure, Oxalbernsteinsäure, Methyladipinsäure, Methylglutarsäure, Dimethylglutarsäure, Fumarsäure, Itaconsäure, Muconsäure, Aconitsäure, Traumatinsäure, Glutaconsäure, Äpfelsäure, Phthalsäure, Orthophthalsäure, Isophthalsäure, Trimesinsäure und Trimellitsäure.

2. Fällungskieselsäure nach Anspruch 1, wobei die mindestens eine Polycarbonsäure aus der Gruppe bestehend aus Malonsäure, Tricarballylsäure, Glutarsäure, Adipinsäure, Methyladipinsäure, Pimelinsäure, Suberinsäure, Azelainsäure, Sebacinsäure, Methylbernsteinsäure, Ethylbernsteinsäure, Methylglutarsäure, Dimethylglutarsäure und Äpfelsäure ausgewählt ist.

3. Fällungskieselsäure nach Anspruch 1 oder 2, umfassend eine Mischung von mindestens zwei Polycarbonsäuren.

4. Fällungskieselsäure nach einem der Ansprüche 1 bis 3, wobei der Gesamtgehalt (C) an Polycarbonsäure und/oder entsprechendem Carboxylat, ausgedrückt als Gesamtkohlenstoff, mindestens 0,15 Gew.-% beträgt.

5. Fällungskieselsäure nach einem der Ansprüche 1 bis 4, ferner **dadurch gekennzeichnet, dass** sie eine Wasseraufnahme von mindestens 6,0 % aufweist.

6. Fällungskieselsäure nach einem der Ansprüche 1 bis 5, **dadurch gekennzeichnet, dass** sie eine dispersive Komponente der Oberflächenenergie $\gamma_s^d$ von weniger als 43 mJ/$m^2$ aufweist.

7. Verfahren zur Herstellung von Fällungskieselsäure nach einem der Ansprüche 1 bis 6, bei dem man mindestens ein Silikat mit mindestens einem Ansäuerungsmittel umsetzt, wobei man eine Kieselsäuresuspension erhält, bei dem man :

   (i) eine Grundmischung bereitstellt, die einen Teil der Gesamtmenge des an der Reaktion beteiligten Silikats und eines Elektrolyts umfasst, wobei die Konzentration an Silikat, ausgedrückt als $SiO_2$, in der Grundmischung weniger als 120 g/l beträgt und die Konzentration des Elektrolyts in der Grundmischung zwischen 15 und 25 g/l liegt;
   (ii) eine Menge eines Ansäuerungsmittels zu der Grundmischung gibt, wobei man einen pH-Wert zwischen 7,0 und 8,5 erhält;
   (iii) gleichzeitig jegliches verbliebene Silikat und jegliches erforderliche zusätzliche Ansäuerungsmittel zu der Grundmischung gibt, wobei man den pH-Wert zwischen 7,0 und 8,5 hält;
   (iv) weiterhin ein Ansäuerungsmittel zum Erhalt eines pH-Werts zwischen 4,0 und 6,0 zugibt, wobei man eine Kieselsäuresuspension erhält;
   (v) die Kieselsäuresuspension filtriert, wobei man einen Filterkuchen erhält;
   (vi) den Filterkuchen einem Verflüssigungsschritt unterwirft, bei dem gegebenenfalls eine Aluminiumverbindung zugesetzt wird, wobei man eine Suspension von Fällungskieselsäure erhält; und
   (vii) gegebenenfalls die nach dem Verflüssigungsschritt erhaltene Fällungskieselsäure trocknet;

   wobei während oder nach dem Verflüssigungsschritt mindestens eine Polycarbonsäure aus der Gruppe bestehend aus Malonsäure, Tricarballylsäure, Glutarsäure, Adipinsäure, Pimelinsäure, Suberinsäure, Azelainsäure, Sebacinsäure, Methylbernsteinsäure, Ethylbernsteinsäure, Oxalbernsteinsäure, Methyladipinsäure, Methylglutarsäure, Dimethylglutarsäure, Fumarsäure, Itaconsäure, Muconsäure, Aconitsäure, Traumatinsäure, Glutaconsäure, Äpfelsäure, Phthalsäure, Orthophthalsäure, Isophthalsäure, Trimesinsäure und Trimellitsäure zu dem Filterkuchen gegeben wird und wobei die Umsetzung des mindestens einen Silikats mit dem mindestens einen Ansäuerungsmittel bei einer konstanten Temperatur zwischen 80 und 97°C durchgeführt wird.

8. Verfahren nach Anspruch 7, bei dem während des Verflüssigungsschritts eine Aluminiumverbindung zugegeben wird.

**9.** Verfahren nach Anspruch 8, bei dem die mindestens eine Polycarbonsäure und die Aluminiumverbindung gleichzeitig zugegeben werden.

**10.** Verfahren nach einem der vorhergehenden Ansprüche, bei dem die mindestens eine Polycarbonsäure aus der Gruppe bestehend aus Malonsäure, Tricarballylsäure, Glutarsäure, Adipinsäure, Methyladipinsäure, Pimelinsäure, Suberinsäure, Azelainsäure, Sebacinsäure, Methylbernsteinsäure, Ethylbernsteinsäure, Methylglutarsäure, Dimethylglutarsäure und Äpfelsäure ausgewählt wird.

**11.** Polymerzusammensetzung, umfassend die Fällungskieselsäure nach einem der Ansprüche 1 bis 6.

**12.** Artikel, umfassend mindestens eine Zusammensetzung nach Anspruch 11.

**13.** Artikel nach Anspruch 12, bestehend aus einer Schuhsohle, einem Bodenbelag, einer Gasbarriere, einem Flammschutzmaterial, einer Rolle für Seilbahnen, einer Dichtung für Haushaltselektrogeräte, einer Dichtung für Flüssigkeits- oder Gasleitungen, einer Bremssystemdichtung, einem Rohr, einer Ummantelung, einem Kabel, einer Motoraufhängung, einem Batterieseparator, einem Förderriemen, einem Treibriemen oder vorzugsweise einem Reifen.

**Revendications**

**1.** Silice précipitée ayant une surface spécifique BET de 45 à 200 m$^2$/g, un rapport V2/V1 entre le volume de pores produit par les pores ayant un diamètre de 175 à 275 Å (V2) et le volume de pores produit par les pores ayant des diamètres inférieurs ou égaux à 400 Å (V1) d'au maximum 49 % et comprenant au moins un acide polycarboxylique sélectionné dans le groupe constitué de l'acide malonique, de l'acide tricarballylique, de l'acide glutarique, de l'acide adipique, de l'acide pimélique, de l'acide subérique, de l'acide azélaïque, de l'acide sébacique, de l'acide méthylsuccinique, de l'acide éthylsuccinique, de l'acide oxalosuccinique, de l'acide méthyladipique, de l'acide méthylglutarique, de l'acide diméthylglutarique, de l'acide fumarique, de l'acide itaconique, de l'acide muconique, de l'acide aconitique, de l'acide traumatique, de l'acide glutaconique, de l'acide malique, de l'acide phtalique, de l'acide orthophtalique, de l'acide isophtalique, de l'acide trimésique, et de l'acide trimellitique.

**2.** Silice précipitée selon la revendication 1, dans laquelle ledit au moins un acide polycarboxylique est sélectionné dans le groupe constitué de l'acide malonique, de l'acide tricarballylique, de l'acide glutarique, de l'acide adipique, de l'acide méthyladipique, de l'acide pimélique, de l'acide subérique, de l'acide azélaïque, de l'acide sébacique, de l'acide méthylsuccinique, de l'acide éthylsuccinique, de l'acide méthylglutarique, de l'acide diméthylglutarique, et de l'acide malique.

**3.** Silice précipitée selon l'une quelconque des revendications 1 ou 2, comprenant un mélange d'au moins deux acides polycarboxyliques.

**4.** Silice précipitée selon l'une quelconque des revendications 1 à 3, dans laquelle la teneur totale (C) en acide polycarboxylique et/ou en carboxylate correspondant, exprimée en carbone total, est d'au moins 0,15 % en poids.

**5.** Silice précipitée selon l'une quelconque des revendications 1 à 4, **caractérisée en outre en ce qu'**elle a une absorption d'eau d'au moins 6,0 %.

**6.** Silice précipitée selon l'une quelconque des revendications 1 à 5, **caractérisée en ce qu'**elle a une composante dispersive de l'énergie de surface $\gamma_s^d$ qui est inférieure à 43 mJ/m$^2$.

**7.** Procédé de fabrication de silice précipitée selon l'une quelconque des revendications 1 à 6, ledit procédé comprenant la réaction d'au moins un silicate avec au moins un agent acidifiant, pour produire une suspension de silice, qui comprend les étapes consistant à :

(i) fournir un mélange de base comprenant une portion de la quantité totale du silicate impliqué dans la réaction et un électrolyte, la concentration de silicate, exprimée en tant que SiO$_2$, dans ledit mélange de base, étant inférieure à 120 g/l, et la concentration de l'électrolyte dans ledit mélange de base étant de 15 à 25 g/l ;
(ii) ajouter une quantité d'un agent acidifiant audit mélange de base pour obtenir une valeur de pH de 7,0 à 8,5 ;

(iii) ajouter simultanément tout le silicate qui peut rester et tout agent acidifiant additionnel qui peut être nécessaire audit mélange de base tout en maintenant la valeur de pH entre 7,0 et 8,5 ;

(iv) ajouter en outre un agent acidifiant pour obtenir une valeur de pH de 4,0 à 6,0 afin d'obtenir une suspension de silice ;

(v) soumettre ladite suspension de silice à une filtration pour produire un gâteau de filtration ;

(vi) soumettre ledit gâteau de filtration à une étape de liquéfaction, comprenant optionnellement l'addition d'un composé d'aluminium, pour obtenir une suspension de silice précipitée ; et

(vii) éventuellement, sécher la silice précipitée obtenue après l'étape de liquéfaction ;

dans lequel au moins un acide polycarboxylique sélectionné dans le groupe constitué de l'acide malonique, de l'acide tricarballylique, de l'acide glutarique, de l'acide adipique, de l'acide pimélique, de l'acide subérique, de l'acide azélaïque, de l'acide sébacique, de l'acide méthylsuccinique, de l'acide éthylsuccinique, de l'acide oxalosuccinique, de l'acide méthyladipique, de l'acide méthylglutarique, de l'acide diméthylglutarique, de l'acide fumarique, de l'acide itaconique, de l'acide muconique, de l'acide aconitique, de l'acide traumatique, de l'acide glutaconique, de l'acide malique, de l'acide phtalique, de l'acide orthophtalique, de l'acide isophtalique, de l'acide trimésique, et de l'acide trimellitique, est ajouté au gâteau de filtration durant ou après l'étape de liquéfaction, et dans lequel la réaction dudit au moins un silicate avec ledit au moins un agent acidifiant est conduite à une température constante de 80 à 97°C.

8. Procédé selon la revendication 7, dans lequel un composé d'aluminium est ajouté durant l'étape de liquéfaction.

9. Procédé selon la revendication 8, dans lequel ledit au moins un acide polycarboxylique et le composé d'aluminium sont ajoutés en même temps.

10. Procédé selon l'une quelconque des revendications précédentes, dans lequel ledit au moins un acide polycarboxylique est sélectionné dans le groupe constitué de l'acide malonique, de l'acide tricarballylique, de l'acide glutarique, de l'acide adipique, de l'acide méthyladipique, de l'acide pimélique, de l'acide subérique, de l'acide azélaïque, de l'acide sébacique, de l'acide méthylsuccinique, de l'acide éthylsuccinique, de l'acide méthylglutarique, de l'acide diméthylglutarique, et de l'acide malique.

11. Composition de polymère comprenant la silice précipitée selon l'une quelconque des revendications 1 à 6.

12. Article comprenant au moins une composition selon la revendication 11.

13. Article selon la revendication 12, consistant en une semelle de chaussure, un revêtement de sol, une barrière aux gaz, un matériau ignifuge, un rouleau pour des transporteurs par câbles, un joint d'étanchéité pour des appareils électroménagers, un joint d'étanchéité pour des conduites destinées à des liquides ou à des gaz, un joint d'étanchéité d'un système de freinage, un tuyau, un gainage, un câble, un support de moteur, un séparateur de batterie, une courroie transporteuse, une courroie de transmission ou, préférablement, un pneu.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5800608 A
- US 20130156674 A1
- US 2013178569 A1
- WO 2006125927 A
- EP 396450 A

**Non-patent literature cited in the description**

- *The Journal of the American Chemical Society,* February 1938, vol. 60, 309
- **DORRIS ; GRAY.** *J. Colloid Interface Sci.,* vol. 77 (180), 353-362